# EUROPEAN PATENT APPLICATION

(11) **EP 0 753 707 A1**
(43) Date of publication of application: **15.01.1997**
(21) Application number: 95201883.6
(22) Date of filing: 10.07.1995
(51) Int. Cl.: F24D 1/00, F24D 19/10

(54) **Heating apparatus having a water circulation controlled on the basis of the heat requirement measured in a heating circuit**

(71) Applicant: Dejatech B.V., NL-5951 DB Belfeld (NL)
(72) Inventor: Deckers, Jan Hubertus, 5912 TW Venlo (NL)
(74) Representative: Smulders, Theodorus A.H.J., Ir.

(57) **Abstract**

Heating apparatus comprising a heating boiler (1) and at least one heating circuit (4) connected thereto via a pump (9), wherein during operation water heated in the heating boiler (1) can be pumped by the pump (9) through the relevant heating circuit (4), with means being included for determining the heat demand in the or each heating circuit (4), and with switching means being included for controlling the pump (9) included in the relevant heating circuit (4) on the basis of the heat demand. A measuring device is provided for measuring at least changes in the temperature of the water in the heating boiler (1), which measuring device is arranged for determining at least on the basis thereof the heat demand of the heating circuits (4), means being included for providing a burner signal to the burner for maintaining the water in the heating boiler (1) at a substantially constant temperature and for controlling the or each pump (9).

## Description

The invention relates to a heating apparatus according to the preamble of claim 1. Such a heating apparatus is known from British patent application 2 113 427.

In the known heating apparatus, the supply pipe and the return pipe each comprise a temperature sensor connected to a control unit. In the control unit, the difference between the measured supply water and return water temperatures is determined and on the basis thereof the pump speed is controlled. In the case of a large difference in temperature, the speed of the pump is increased, in the case of a small difference it is reduced. In addition, when the speed of the pump increases, the heating element of the heating boiler is actuated, and when the speed decreases, the heating element is switched off. In this manner, the capacity of the pump is in each case adjusted to the heat demand of the heating circuit, which saves energy compared with apparatuses where the pump runs continuously at full load.

At least when thermostatic control knobs are used, this known heating apparatus has the drawback that it gives rise to two control errors, which errors affect the burning behaviour disadvantageously from an energetic point of view. This can be understood as follows.

If the difference in temperature between the supply and the return is large, this can signify two situations, viz.:
- one or a series of radiator valves have been opened from the closed position by hand. Directly upon opening, a low return water temperature arises so that the large temperature difference is measured, and hence a high speed of the pump is desired. In this situation, the control behaviour of the known heating apparatus is in agreement with the desired situation.
- the radiator valves have been automatically controlled into the closed position because the desired temperatures have been reached. This situation involves a low energy demand and hence a low speed is to be set. Consequently, in this situation the control behaviour is inconsistent with the desired situation.

If the difference in temperature between the supply and the return is small, this can signify two situations, viz.:
- only one or a few radiator valves have been opened by hand (for instance in a living space). This situation involves a low energy demand and hence a low speed is to be set. Consequently, in this situation the control behaviour is in agreement with the desired situation.
- all radiator valves have been opened, resulting in a high heat demand and hence a high speed of the pump is desired. In this situation, the control behaviour of the known heating apparatus is inconsistent with the desired situation.

Hence, with the known heating apparatus, in two of the four situations presented, the pump will at least temporarily be controlled unfavorably or even inappropriately, causing loss of energy and, at least temporarily, an uncomfortable burning behaviour, the more so because the heating element in the heating boiler is controlled partly on the basis of the behaviour of the pump.

A further drawback of this known heating apparatus is that the heating means of the apparatus are controlled at a relatively low speed, permitting the water in the boiler to cool down. In particular when such an apparatus is used as a combined boiler, i.e. for space heating as well as for sanitary water heating, this has the drawback that the convenience time is long, in particular if no heat demand has been established for a longer time. A long convenience time means that the time elapsing between the establishment of a heat demand by opening a hot water tap and the moment when the water of the desired temperature is available, is long.

Accordingly, the object of the invention is to provide a heating apparatus of the type described in the preamble of the main claim, whereby the drawbacks of the above-mentioned apparatuses are avoided while the advantages are retained. To that end, a heating apparatus according to the invention is characterized by the features of claim 1.

By measuring the temperature of the water in the heating boiler and, on the basis thereof, controlling the burner on the one hand and the pump on the other, any heat demand and/or change therein can met rapidly and reliably with minimum energy consumption. The amount of heated water being passed through the heating circuit is regulated by control of the pump capacity, so that the temperature of the or each heating circuit can be controlled advantageously, comfortably and energetically advantageously. As a result, the temperature in a space or each space where one or more heating elements are arranged can be controlled individually and as required by providing the heating elements with a thermostatic control knob. By means of the thermostatic control knob, the desired temperature can then be set for each heating element. If such a control knob is controlled into the open position as a result of a decrease in temperature, a heat demand will be established, so that the pump will be set for the supply of more hot water, until the control knob is controlled into the closed position again. Given a regular and energetically favourable burning behaviour, the apparatus according to the invention offers a great comfort and ease of use, allowing individual control of the temperature in each space without the occurrence of the errors of the known heating apparatus. Moreover, there is no need to continuously circulate heated water through a bypass pipe if no hot water is being demanded by the heating elements.

In further elaboration of the invention, the invention is characterized by the features according to claims 2-4.

By measuring the magnitude of the difference between the measured and the set temperature, the pump capacity can be adjusted so that the or each heat demand can be optimally met without the capacity of the heating boiler being exceeded. This means that in exceptional situations, the capacity of at least one of the pumps can be maintained at a suboptimal level, for instance when a very large heat demand is established both in a sanitary water heating circuit and in a space heating circuit. In that case, priority can for instance be given to the sanitary water heating by controlling the pump capacity of the pump in the space heating circuit at least temporarily to a lower value than would be optimal in view of the heat demand and the temperature of the boiler water.

In a preferred embodiment, a heating apparatus according to the invention is characterized by the features according to claim 5.

By measuring the difference in temperature of the water in the supply pipe to the heating circuit and of the water in the discharge pipe from the heating circuit to the heating boiler, it can be simply determined whether water is being passed through a heating element while releasing heat. Thus, in a simple manner an indication is obtained of whether there is any heat demand in the relevant heating circuit. In fact, if this difference deviates from a particular limit value, it is probable that there is a heat demand in one of the spaces heated by the heating elements. Partly on the basis of this measured difference, as long as a deviation of the boiler water temperature from the set desired value is being measured, the pump and the burner of the heating boiler are activated until the measured difference has been reduced to a preset limit value. By measuring the flow rate in the heating circuit in combination with the temperature measurements, the heat demand can be determined even better and moreover changing heat demands can be responded to even faster.

The heat demand of the or each heating circuit when using an apparatus according to the invention can be determined on the basis of the water temperature (for instance absolute temperature, temperature differences, temperature changes), the water flow rate (for instance absolute flow, changes in flow) or preferably a combination thereof. A change in the measured quantity or quantities indicates a change in the heat demand in the heating circuit in question. On the basis of this change, and in particular the magnitude and rate of the changes, a burner control signal is provided for keeping the water in the heating boiler at a desired temperature and for actuating the pump, in such a manner that always a suitable amount of water of the desired temperature is passed through the heating circuit in question.

For the supply of sanitary water by means of the heating apparatus according to the invention, it is possible to include in a sanitary water heating circuit as mentioned a storage boiler in which a supply of heated water can be stored. An alternative embodiment of the heating apparatus according to the invention which is particularly suitable for the supply of at least sanitary water is characterized by the features according to claim 6.

By adjusting the desired sanitary water temperature by means of the tap water temperature adjusting means, measurement of the temperature of the exiting tap water and the mutual comparison thereof, it can be simply determined whether sufficient heat is being supplied by the heat exchange element to meet the heat demand. If the measured temperature deviates from the desired temperature, it will be necessary, by means of the pump and optionally the burner of the heating boiler, to supply more hot water, until the desired temperature is measured again.

By measuring the flow in the supply pipe for the sanitary water to the heat exchange element, an indication of the required heat capacity in the near future is obtained. This provides the possibility of anticipating the heat demand, so that the so-called convenience time is shortened and fluctuations in the tap water temperature are avoided. The convenience time is the time between the moment when the tap is opened and the moment when hot water actually flows from the tap. This convenience time should naturally be as short as possible. For that matter, it is advantageous here if the temperature of the water in the supply pipe is also measured. This enables an even better anticipation of the required heat in the heat exchange element.

The heat exchange element is preferably arranged outside the heating boiler because this prevents calcium precipitation in the heat exchange element.

By adjusting the capacity of the pump on the basis of the measured heat demand, the amount of water, and hence the heat supplied to the or each heat exchange element, can be simply and particularly advantageously adjusted on the basis of that heat demand. As a result, the temperature of each heat exchange element is always appropriately increased. If the heat demand is large, much hot water per unit time is supplied, so that sufficient heat capacity is present to remove the temperature difference rapidly, while only little hot water is supplied if the heat demand is small, which prevents the temperature of the or each heat exchange element from increasing too rapidly. In this manner always a relatively constant temperature will be maintained in the different heat exchange elements and spaces, which temperature can also be rapidly adjusted for each individual space. An electronically or electromechanically controllable pump then has the advantage that the capacity is well and uniformly adjustable on the basis of the signals provided by the switching means in question.

A further preferred embodiment of a heating apparatus according to the invention is characterized by the features according to claim 7.

In this embodiment the pump is maintained in operation only when such is needed as a result of a heat demand at one or more of the heat exchange elements, while yet periodically the pump is switched on and the water is set in motion. If there is no heat demand, the water in the heating circuit comes to a standstill, as a result of which it might cool down. This might create the impression that the heat demand has been met everywhere while yet a heat demand exists in one or more of the spaces. By periodically switching the pump on, such a possible demand can yet be established while no energy is being wasted by unnecessarily continuing the circulation of hot water by the pump.

By making use of an interval control according to the invention, a self-learning system is obtained. If the pump after a first period of rest is switched on and in the first operating period no heat demand is established, then a following, second period of rest is set to be slightly longer by the interval control. If in the next, second operating period again no heat demand is established, in turn a next, third period of rest is set to be slightly longer than the second period of rest, etc. The periods of rest become increasingly longer, preferably to a particular maximum, as long as no heat demand is established. However, if a heat demand is established, then at least the pump is maintained in operation until the heat demand has been met. At the same time, the interval control is reset to the initial situation, so that the first period of rest has the minimum duration again.

By making use of a self-learning interval control, it is ensured that in case of prolonged absence of any heat demand, the pump is only switched on for a short time at relatively long intervals. As a result, only a minimum of energy is used and moreover wear is minimal. The reset possibility of the interval control moreover offers the advantage that in the case of a sudden heat demand, for instance upon a user's return after prolonged absence, the user can directly set the heating apparatus into full operation again, whereafter the heat demand can be rapdily met.

The invention further relates to a control device suitable for use with a heating apparatus according to the invention and to a method for controlling the heating and circulation of water in a heating boiler and a heating circuit.

It is noted that heating apparatuses are known from practice which utilize only a boiler water thermostat by which the burner of the heating circuit is actuated and deactuated. When using merely a boiler water thermostat which is arranged in the heating boiler, heated water is continuously pumped round through the heating circuit or, if all heating elements are closed, via a bypass pipe. The burner of the heating boiler is then switched on if the measured temperature in the heating boiler falls below a particular limit value and is switched off if the boiler water theremostat measures the temperature desired in the heating boiler. This known apparatus has the disadvantage that the pump runs continuously at full load, regardless of the heat being demanded. The bypass pipe is then heated continuously. As a consequence, this apparatus is energetically inefficient and the pump is subject to unnecessary wear. Comparable disadvantages arise when the known apparatus is used in combination for heating spaces and sanitary water.

To clarify the invention, exemplary embodiments of heating apparatuses will be described with reference to the drawings.
Fig. 1 schematically shows a first embodiment of a heating apparatus according to the invention, comprising two space heating circuits;
Fig. 2 schematically shows a second embodiment of a heating apparatus according to the invention, comprising a space heating circuit and a storage boiler;
Fig. 3 schematically shows a third embodiment of a heating apparatus according to the invention, comprising a through-flow boiler;
Figs. 4A and 4B both show a switching pattern for a pump in a heating circuit according to the invention, Fig. 4A in the case of prolonged absence of any heat demand and Fig. 4B upon a heat demand being established after the lapse of some time.

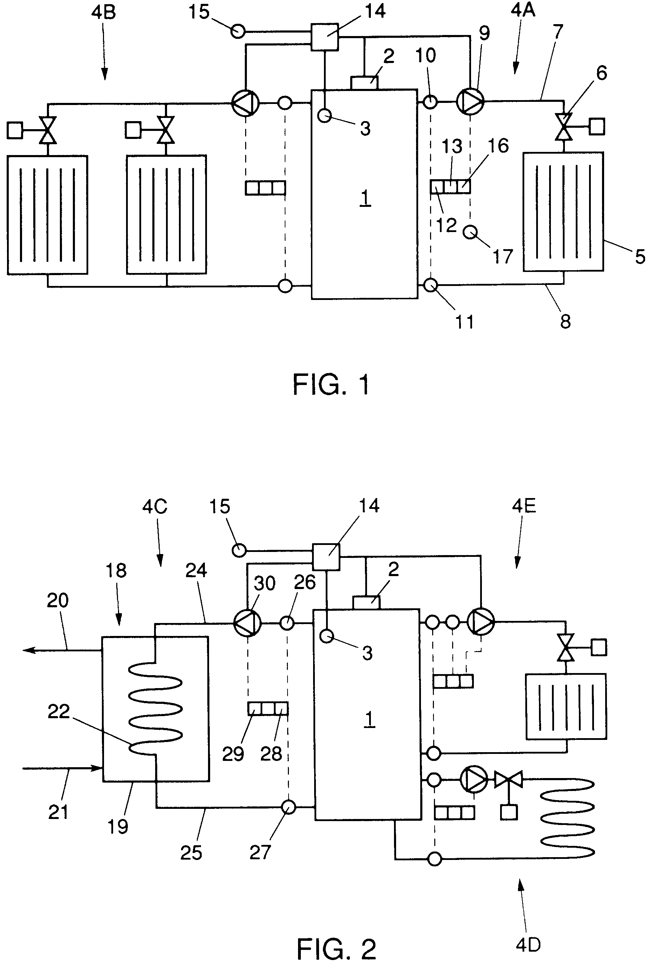

In Fig. 1 a heating boiler 1 is shown. The heating boiler 1 comprises a burner 2 and a boiler water thermostat coupled thereto. Connected to the heating boiler 1 are a number of space heating circuits 4A, 4B. In Fig. 1, by way of example only, two circuits 4 are shown, but it is also possible to connect a larger or lesser number of circuits to the heating boiler 1. The space heating circuit 4A, shown on the right in Fig. 1, comprises one heating element 5, comprising a thermostatic radiator knob 6; the space heating circuit 4B, shown on the left in Fig. 1, comprises two such heating elements 5. Of course, it is equally possible to connect a different number of heating elements 5, with the heating elements 5 being designed, for instance, as radiators, convectors, floor heating elements or heat exchange elements of any other type. The space heating circuits 4A, 4B are identical in structure. For clarity, only the right-hand heating circuit 4A will be described.

The heating circuit 4A is connected with the heating boiler 1 via a supply pipe 7 and a return pipe 8. The heating circuit includes a pump 9, the capacity of which can be controlled, preferably electronically or electromechanically. In or on the supply pipe 7 and in or on the return pipe 8, adjacent the heating boiler 1, a first temperature sensor 10 and a second temperature sensor 11, respectively, are included. These temperature sensors 10, 11 can for instance be designed as NTCs and be connected with a temperature difference measuring device 12 and pump switching means 13 coupled thereto. Incidentally, in certain cases the boiler water thermostat 13 can be used as a first temperature sensor 10, for instance if only one heating circuit is connected.

The heating apparatus according to the invention can be used as follows.

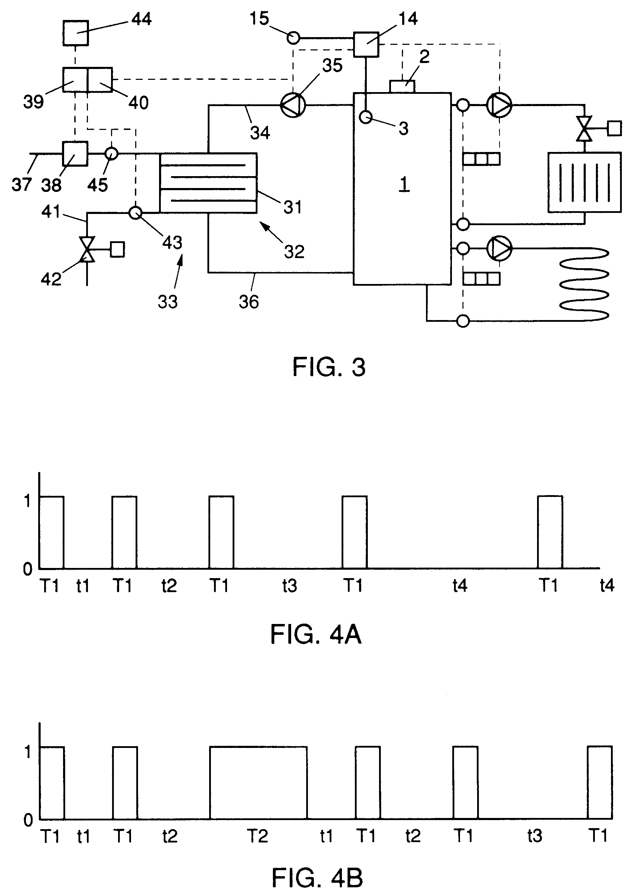

The boiler water thermostat 3 is set to a desired temperature, for instance 60°C. This setting is preferably effected with the aid of a weather-dependent control 14 with outside temperature sensor 15, coupled to the boiler water thermostat. In the heating boiler the water is therefore maintained at a relatively constant temperature, so that a supply of heat is always present. At time t=0, depicted in Fig. 4, the pump 9 is switched on by means of the pump switching means 13, which pump switching means comprise an interval control 16. The pump 9 is maintained in the "on" condition for a period T1, during which period T1 the control measures any temperature changes. On the basis thereof, on the one hand a burner control signal is provided for actuating the burner, if necessary, and on the other a control signal is provided for actuating the pump. The control signal for the pump is such that, as a result, an appropriate percentage of the capacity of the pump is activated.

In the difference measuring device 12 a limit value G can be set for the allowable difference V. If the measured difference V deviates to a particular extent from this limit value G, a heat demand in the relevant space heating circuit 4A is assumed and the pump 9 is switched on. In the process, the capacity C of the pump is set to be greater or lesser, depending on the magnitude of the measured difference V and temperature changes in the boiler water temperature. The relation between the magnitude of the difference V and the capacity C of the pump 9 can preferably be set by means of burning line adjusting means. Thus the burning behaviour, and in particular the rate at which temperature changes are accommodated, can be individually controlled in optimum manner.

The capacity C of the pump 9 can for instance be adjusted in 16, 32 or 256 increments, but is preferably continuously controllable. The heat release by the burner 2 is preferably controllable, for instance by the use of a modulating burner or a stepwise controllable burner.

Depending inter alia on the measured difference V, the switching behaviour of the pump 9 is controlled. In Fig. 4 two switching patterns for the pump 9 are shown in a stabilized situation of use. In Fig. 4 "0" indicates that the pump 9 is off and "1" indicates that the pump 9 is on. "T" is the time during which the pump is on, "t" is the time during which the pump is off.

At t=0 (on the left in Figs. 4A and 4B), the pump 9 is switched on for the period T1 (for instance 30 sec.) and the difference V and any changes in the boiler water temperature are measured. In neither of the patterns is any heat demand established, so that after elapse of the period T1 the pump 9 is switched off and is maintained in the off condition for the period t1 (for instance t1 = 5 min.). Upon elapse of the period t1, the pump is switched on for a period T1 again, and subsequently, since no heat demand is established, maintained in the off condition for a period t2, which is longer than t1 (for instance t2 = 6 min.).

Upon elapse of the period t2 the pump is switched on again and it can be understood from the switching pattern according to Fig. 4A that again no heat demand is established, so that the pump upon elapse of a period T1 is switched off again for a period t3 which is longer than t2 (for instance t3 = 8 min.). In this way, if no heat demand is established, the interval tn is extended more and more, until a particular maximum is achieved, such as (in Fig. 4) t4 (for instance, 10 min or a few hours) or until a heat demand is established. After the set maximum time, no control cycle is traversed anymore and the or each pump is maintained in the off condition. If desired, the user can reset the apparatus in order to initiate a control cycle again.

The maximum time, to be set on the boiler control, can be determined as follows. At the hottest time of day, the thermostat valves on the heating elements close automatically. For the rest of the day they will in most cases remain closed as a result of the (solar) heat retained in the space. Only after sunset will the thermostat valves open again as a result of the spaces cooling down. The maximum time to be set should therefore be longer than the time between the hottest time of the day and sunset. This control may be coupled to the outside temperature control 14 and be chosen to be season-dependent. By switch-off upon elapse of the maximum period of time without heat demand, energy is saved during, for instance, prolonged absence of the user.

With the aid of a preferably visual indicator, such as a control light, it can be indicated whether the burner is in operation and whether water is being circulated by pumping. In addition, it can thus be indicated whether any control cycles are being traversed or whether to that end the reset should be operated first. The heating apparatus is then preferably provided with a frost protection, which is so arranged that when the outside temperature falls below a particular lower limit, the maximum duration of the rest periods is limited, so that hot water will be passed through the heating circuit at least with some regularity.

It can be understood from the switching pattern according to Fig. 4B that after the period t2 the pump is switched on again and that subsequently a heat demand is established. The pump is therefore maintained in operation for a period T2. The duration of this period is determined by the difference measuring device 12 and the boiler water thermostat 13. If no heat demand is established anymore, the pump is switched off again, while during the period T2 the interval control 16 is reset to the initial position again, so that the first rest period covers the period t1 again and a new cycle begins.

Resetting the interval control 16 can also be effected via a reset button 17, for instance when a user returns after a period of absence during which no heat was demanded. The user will then want to have heat fast and for that purpose presses the reset button 17, so that the pump 9 is switched on directly and satisfies the heat demand.

In Fig. 2 an alternative embodiment of a heating apparatus according to the invention is shown, where a heating circuit 4C includes a storage boiler 18. This boiler 18 substantially consists of a vessel 19 to which connect a tap water discharge pipe 20 and a tap water supply pipe 21. Extending in the vessel 19 is a heating coil 22 which is connected via a supply pipe 24 and a return pipe 25 with the heating boiler 1.

Included in the supply pipe 24 and the return pipe 25 are a third temperature sensor 26 and a fourth temperature sensor 27, respectively, which are connected with a second difference measuring device 28 and second switching means 29 for switching a pump 30 included in the supply pipe 24 or return pipe 25. The pump 30 is switched on by the second switching means 29 if a difference indicative of a heat demand is measured.

The heating apparatus according to Fig. 2 in addition comprises a heating circuit 4D, designed as a low-temperature area, the heat release of which is controlled in any one of the above-described ways.

The space heating circuit 4E moreover comprises a flow sensor 50 which, in the embodiment shown in Fig. 2, is included in the supply pipe. By means of this flow sensor 50 the capacity of the pump 9 can be controlled and the burner 2 can optionally be adjusted, so that the heat demand of the heating circuit can be suitably met. Thus, for instance, a large flow and a small temperature difference will generally indicate a large heat demand, while a small flow and a large temperature difference indicate a small heat demand in a stabilized situation of use. If a large flow is measured, with the temperature difference being large, this generally indicates a non-stabilized situation of use, for instance a return home after a long time in a cold space or, conversely, the closure of radiators in a hot space. Because these situations can be distinguished, the burning behaviour of a heating apparatus according to the invention can be eminently adjusted, so that the comfort is optimal.

Fig. 3 shows a further exemplary variant of the heating apparatus according to the invention, comprising a through-flow boiler 31. The through-flow boiler 31 comprises a first side 32, called boiler side, and a second side 33, called the tap water side. The boiler side 32 is connected with the heating boiler 1 via a supply pipe 34, which includes a pump 35, and a return pipe 36. The tap water side 33 is connected via a tap water supply pipe 37 to a water mains system, not shown in the drawing. The tap water supply pipe includes a flow measuring device 38, which is connected with a third difference measuring device 39 and third switching means 40. The tap water side 33 further comprises a tap water discharge pipe 41, which connects to a tap 42 and comprises a fifth temperature sensor 43. This temperature sensor is also connected to the third difference measuring device 39. The third difference measuring device 39 further comprises water temperature adjusting means 44.

The through-flow boiler 31 according to Fig. 3 can be used as follows.

With the aid of the water temperature adjusting means 44 a desired tap water temperature H is set. If the tap 42 is turned on, the fifth temperature sensor 43 measures the tap water temperature S which is compared with the desired tap water temperature H in the third difference measuring device 39. If the measured temperature S is too low, the pump 35 is set in operation for the supply of heated water from the heating boiler 1 to the boiler side 32 of the boiler 31, so that the tap water temperature is raised to the desired temperature.

Simultaneously, the flow measuring device 38 measures the amount of water which is supplied to the boiler 31 from the mains. The third switching means 40 are so arranged as to enable anticipation of the heat demand on the basis of this amount: if a larger amount of water is being supplied for a longer time, the heat demand will at least for some time be greater than in the case of a smaller amount for a short time. In the former case, therefore, more heat will have to be supplied, so that the capacity of the pump 35 has to be increased and optionally the pump 35 is to be actuated sooner. With this through-flow boiler according to the invention, any desired amount of heated tap water can be obtained, substantially instantaneously. This means that this heating apparatus also has a very short convenience time with regard to tap water heating, while yet being highly economic from an energetic point of view.

The tap water supply pipe is preferably provided with a further temperature sensor 45, which is also connected with the third difference measuring device 39. As a result, in anticipating the heat demand, the desired temperature increase of the tap water can also be taken into account.

The through-flow boiler 31 is preferably arranged outside the heating boiler 1, which prevents calcium precipitation in the boiler. In fact, the temperature in the boiler will drop relatively fast if no heat demand exists, so that the calcium in the water gets no chance to precipitate in the boiler.

In the use of a heating apparatus according to the invention for heating sanitary water in particular, it is required to always maintain a minimum boiler water temperature which is higher than the desired sanitary water temperature. This also applies when the heat demand of the or each space heating circuit is low and if the weather-dependent control indicates a lower desired boiler water temperature. Thus the weather-dependent control can for instance indicate a boiler water temperature of 50°C as being desirable because it is more than 10°C outside, while for the sanitary water heating at least 60°C is necessary. The minimum boiler water temperature, the so-called boiler water temperature limit value, can therefore be preferably set on the control device, the control device being set in such a manner that at all times, for the calculation of the heat demand of any heating circuit, the desired boiler water temperature indicated by the weather-dependent control is used, regardless of the possibly deviant real boiler water temperature. The control device in those cases utilizes a fictive temperature. As a result, always the correct heat capacity is passed through each heating circuit. A heating circuit according to the invention is moreover preferably provided with a central control unit, for instance combined with the weather-dependent control 14 and the switching means for the pumps, by which the instantaneous capacities of the different pumps can be mutually adjusted, depending inter alia on the heat demands in the different circuits, the preferences of the user and the maximum heat supply and heat capacity of the heating boiler. Such a central control unit can for instance be used as follows.

A user indicates that he or she gives priority to hot sanitary water over space heating, provided each space does remain slightly warm. Upon establishment of a combined heat demand of the sanitary water heating circuit and a or each space heating circuit which is greater than can be met immediately by the heating boiler, the capacity of the pump 30, 35 in the sanitary water heating circuit is set relatively higher than that of the pump in the or each space heating circuit. So, to the or each space heating circuit, at least temporarily less heat is supplied than would be necessary on the basis of the measurement, in such a manner that the heat demand of the sanitary water heating circuit can be met better. Of course, other priorities can be set.

The invention is not in any way limited to the exemplary embodiments as shown and described in the drawing and the description of the drawings. Many variants are possible within the framework of the invention.

Thus a pump can be used which can only be switched on and off, with the heat demand being met by switching the pump in modulation. A further possibility is to combine the different embodiments, with some heating circuits, if desired, being provided in known manner with a room thermostat or comparable control. Further, a different kind of interval control can be opted for or it can be omitted, and it is possible to include provisions, for instance, for night reduction or for a time control mechanism.

The different difference measuring devices, switching means and other measuring and control means may be mutually coupled to form an integral control device, so that the available heat can be distributed over the different heating circuits in optimum manner. Moreover, such a control device can be arranged as a loose item on existing heating apparatuses.

## Claims

**1.** A heating apparatus comprising a heating boiler and at least one heating circuit connected thereto via a pump, wherein during operation water heated in the heating boiler can be pumped by the pump through the relevant heating circuit, with means being included for determining the heat demand in the or each heating circuit and switching means being included for controlling the pump included in the relevant heating circuit on the basis of the heat demand, characterized in that at least two heating circuits are connected to the heating boiler, with a measuring device being provided for measuring at least changes in the temperature of the water in the heating boiler, which measuring device is arranged for determining at least on the basis thereof the heat demand of the heating circuits, means being included for providing a burner control signal to the burner for maintaining water in the heating boiler at a substantially constant temperature and for controlling the or each pump.

**2.** A heating apparatus according to claim 1, characterized in that the means for providing a burner control signal are arranged for measuring the difference between the measured water temperature and a set water temperature, with control means being included for proportionally controlling the pump capacity of the or each pump, depending on the magnitude of the measured difference.

**3.** A heating apparatus according to claim 1 or 2, characterized in that at least one space heating circuit and at least one sanitary water heating circuit are connected to the heating boiler.

**4.** A heating apparatus according to claim 3, characterized in that each of the heating circuits comprises a pump, with tuning means being provided for mutually tuning the capacity of the relevant pumps in proportion to the heat demand in the respective heating circuits.

**5.** A heating apparatus according to claim 3 or 4, characterized in that at least one space heating circuit is provided with a first difference measuring device and comprises temperature measuring means arranged on an inlet side and on an outlet side of the first heating circuit, which temperature measuring means are connected via the difference measuring device with switching means, the switching means being arranged in such a manner that at least in a stabilized situation of use, in the case of a difference that deviates from a set limit value, the pump included in the heating circuit is switched on and/or adjusted, while the sanitary water heating circuit comprises a heat exchange element, a first side of the heat exchange element being connected with the heating boiler via a supply and return pipe, while a second side of the heat exchange element is connected with a water mains and is provided on an inlet side with a tap, with tap water temperature adjusting means being included and with temperature measuring means being included on the outlet side, which tap water temperature adjusting means and temperature measuring means are connected with second switching means via a second difference measuring device, the second switching means being so arranged that in the case of a difference between the measured temperatures less than a set desired value, the pump is switched off and in the case of a difference greater than the set desired value, the pump is switched on.

**6.** A heating apparatus according to claim 5, characterized in that on the second side of the heat exchange element, and preferably on the supply side, flow measuring means are included which are connected with the second switching means, the second switching means being arranged for controlling the pump at least partly on the basis of the flow.

**7.** A heating apparatus according to any one of claims 1-6, characterized in that time switching means are included for switching the or each pump on and off, which time switching means are arranged for switching on the pump in the off condition after elapse of a rest period and keeping the pump switched on at least for one operating period and actuating the measuring device in question.

**8.** A heating apparatus according to claim 7, characterized in that the time switching means are provided with an interval control arranged for allowing the duration of the rest period to increase upon repeated absence of any heat demand in the respective heating circuit.

**9.** A heating apparatus according to claim 7 or 8, characterized in that a maximum time is settable, which is comparable with the total time during which no heat demand has been established in a or the relevant heating circuit, with means being included for keeping the pump switched off if the maximum time is shorter than the total time during which no heat demand has been established, while reset means are included for restarting the pump.

**9.** A heating apparatus according to any one of the preceding claims, characterized in that the heating boiler comprises a weather-dependent control, which weather-dependent control is arranged for controlling the boiler water temperature, in such a manner that during use at least the contents of the heating boiler are maintainable at a temperature depending on the outside temperature, independently of the heat demand in the or any heating circuit connected thereto.

**10.** A control unit for use in a heating apparatus according to any one of claims 1-9.

**11.** A method for controlling the heating and circulation of water in a heating boiler and a number of heating circuits on the basis of the heat demand of the or each respective heating circuit, while at least the temperature of the water in the heating boiler is measured, while in a control unit the heat demand is determined on the basis of the magnitude and changes in the boiler water temperature, and a pump included in the heating circuit is controlled on the basis of the heat demand.

**12.** A method according to claim 11, characterized in that in the heating boiler, with the aid of a weather-dependent control, a boiler water temperature depending on the outside temperature is set, while in the control unit a boiler water temperature desired value is set, and while in the case of a boiler water temperature lower than the boiler water temperature desired value, the water in the heating boiler is maintained at the boiler water temperature desired value, while as fictive inflow temperature the boiler water temperature is used in determining the heat demand.
